# FASCICULE DE BREVET EUROPEEN

(11) **EP 2 186 705 B1**
(45) Date de publication et mention de la délivrance du brevet: **05.12.2012**
(21) Numéro de dépôt: 09290829.2
(22) Date de dépôt: 30.10.2009
(51) Int. Cl.: F16C 33/76, F16C 19/38, B61F 15/20, F16C 19/52, G01P 3/487, F16C 41/00, G01P 3/44

(54) **Assemblage à roulement instrumenté pour essieu ferroviaire, son procédé de montage et essieu associé**
Instrumentiertes Wälzlager für Schienenfahrzeugsachse und entsprechendes Montageverfahren
Instrumented roller bearing assembly for railway axle and corresponding method of assembling

(30) Priorité: 30.10.2008 FR 0806050
(43) Date de publication de la demande: 19.05.2010
(73) Titulaire: SNR Roulements, 74000 Annecy (FR)
(72) Inventeur: Ballas, Gérard, 74000 Annecy (FR); Pollier, Vivien, 74370 Pringy (FR)
(74) Mandataire: Jeuland, Mickaël

(56) Documents cités:
- EP-A- 0 829 410
- EP-A- 0 976 638
- EP-A- 1 746 425
- EP-A1- 1 371 991
- FR-A- 2 669 598

## Description

### DOMAINE TECHNIQUE DE L'INVENTION

L'invention se rapporte à l'instrumentation d'un roulement, et notamment d'un roulement de grandes dimensions tel que, par exemple, un roulement de boîte d'essieu de véhicule ferroviaire. Par instrumentation, on entend ici la mise en place de moyens de mesure de certains paramètres de fonctionnement du roulement.

L'invention vise notamment un assemblage à roulement comportant une telle instrumentation pour un essieu d'un véhicule notamment de type ferroviaire.

### ETAT DE LA TECHNIQUE ANTERIEURE

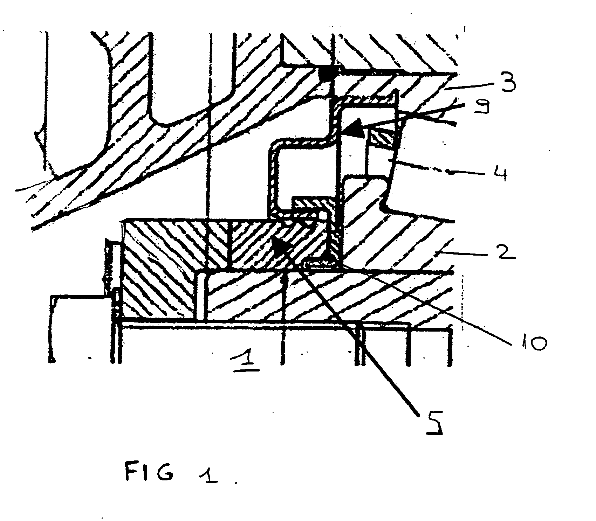

On connaît des roulements tels que représentés sur la figure 1, comprenant essentiellement deux déflecteurs l'un monté sur la bague extérieure fixe du roulement et l'autre sur la bague intérieure rotative du roulement. Ces déflecteurs annulaires forment un labyrinthe d'étanchéité du roulement. Un capteur traversant peut être fixé sur le déflecteur de la bague extérieure et le codeur magnétique peut être fixé soit sur une entretoise intermédiaire soit sur le chapeau porte fusée.

Dans le document FR 2 669 598 est décrite une boîte d'essieu de chemin de fer pourvue d'un roulement conique protégé par un déflecteur fixe solidaire d'une bague extérieure du roulement et par un déflecteur tournant solidaire d'une bague intérieure du roulement, les deux déflecteurs délimitant entre eux un labyrinthe constituant une perte de charge entre un volume intérieur du roulement et un volume extérieur délimité par un carter de la boîte d'essieu. Un module de mesure de la vitesse de rotation du roulement est intégré à la boîte d'essieux. Ce module comporte un anneau codeur solidaire du déflecteur tournant et un capteur fixé au déflecteur fixe dans le volume intérieur du roulement, en regard et à distance d'entrefer du codeur, la connectique du capteur traversant le déflecteur fixe pour relier le capteur à une interface de connexion électrique traversant le carter de la boîte d'essieu.

Ce type de montage, s'il permet un entrefer réduit, ne va pas sans poser des problèmes d'étanchéité à la traversée du déflecteur fixe. De plus, il ne se prête pas au montage de capteurs multiples à la périphérie du roulement, chaque capteur devant alors être pourvu de sa propre connectique de sortie au travers du carter de boîte d'essieu. Il apparaît particulièrement inadapté au montage d'une pluralité de modules de mesure de vitesse pour assurer une redondance de mesure. Enfin, il nécessite de monter les modules capteur sur le roulement avant de monter le roulement dans le carter boîte d'essieu et de refermer le carter. Cette séquence de montage n'est pas toujours aisée notamment dans la phase de montage de la connectique qui doit traverser le carter, du fait de la faible longueur des câbles.

On connaît encore la demande de brevet française déposée au nom de la Demanderesse sous le numéro national d'enregistrement EN 0851217 ; Cette demande protège des roulements instrumentés comprenant notamment un déflecteur métallique annulaire fixe fermant un volume intérieur au roulement, coopérant avec une paroi amagnétique en face de laquelle est disposé un codeur rotatif détecteur de vitesse. Le codeur est ainsi intégré dans le roulement ce qui pose des problèmes d'encrassement dû à sa proximité avec le roulement, de compatibilité du codeur avec la graisse, ou la contamination de la graisse par la ferrite présente dans le codeur. Par ailleurs, le déflecteur est ici de forme complexe ce qui a un coût, et il peut présenter des zones de fragilisation mécanique; de plus, on ne maîtrise pas bien l'entrefer car le codeur est fixé à l'extrémité libre d'un anneau rotatif de faible épaisseur. En outre, un tel roulement devient spécifique et de ce fait non standard et en tout cas non adaptable sur des roulements existants.

Dans le document EP 0 976 638 est décrit un assemblage à roulement instrumenté pour fusée d'essieu ferroviaire suivant le préambule de la revendication 1.

Dans le cas des solutions connues où un codeur rotatif est monté sur le chapeau de la fusée de l'essieu, on ne trouve pas de protection du système de mesure de vitesse vis-à-vis de la pollution par les graisses, huiles et autres particules abrasives par exemple, et vis-à-vis des chocs mécaniques notamment lors des opérations de montage ou de démontage.

De plus, l'art antérieur ne prévoit pas de protection contre les chocs subis par les roulements et/ou leur environnement immédiat.

### EXPOSE DE L'INVENTION

L'invention vise à remédier aux inconvénients de l'état de la technique et notamment ceux évoqués ci dessus.

Pour ce faire est proposé selon un premier aspect de l'invention un assemblage à roulement instrumenté pour une fusée d'essieu selon la revendication 1. Cet assemblage permet une protection efficace du codeur contre toute forme de pollution, aussi bien en fonctionnement que pendant les phases de montage, démontage ou autre manipulation.

Selon l'invention, le capteur fixe est situé à l'extérieur du volume intérieur du roulement, séparé du volume intérieur du roulement au moins par les moyens de séparation, de sorte que le lubrifiant ne s'échappe pas du volume intérieur.

La solution proposée selon l'invention peut être mise en oeuvre en première monte ou lors d'une instrumentation d'un roulement existant.

Selon l'un des modes de réalisation de l'invention, le déflecteur annulaire est métallique et présente au moins une ouverture pour le passage d'au moins une partie du capteur, cette ouverture constituant ladite fenêtre.

Conformément à un autre mode de réalisation de l'invention, le déflecteur est amagnétique.

Selon un mode de réalisation préférentiel, la partie cylindrique du déflecteur peut avantageusement être située à une distance du moyen de codage annulaire inférieure ou égale à la distance d'entrefer. Le capteur fixe peut alors être disposé radialement à l'extérieur de la partie cylindrique du déflecteur.

Le déflecteur peut être lié directement à la bague extérieure du roulement, ou bien être lié à un déflecteur complémentaire fixe lui-même directement lié à la bague extérieure du roulement.

Avantageusement, le moyen de codage est un codeur multipolaire constitué d'un anneau d'impulsion magnétique, connu en lui-même, ou une roue phonique, c'est-à-dire une roue métallique dentée induisant des variations du champ magnétique au passage devant un capteur électromagnétique.

Selon l'une des possibilités, l'invention comprend en outre un support annulaire radialement intercalé entre l'entretoise rotative et le moyen de codage annulaire, formant labyrinthe avec ledit déflecteur annulaire. Cette solution nécessite un nombre réduit de pièces et peut par conséquent être choisie pour son faible coût et sa facilité de montage.

Par ailleurs, l'assemblage à roulement instrumenté peut comprendre un déflecteur mobile présentant une concavité dirigée vers l'entretoise, disposé axialement entre l'entretoise et la bague intérieure du roulement, destiné à former un labyrinthe d'étanchéité avec le déflecteur annulaire ou le déflecteur complémentaire fixe. On choisira l'une ou l'autre des options selon le type de roulement à instrumenter, déjà existant ou non.

De façon intéressante, le capteur fixe présente une disposition et/ou une géométrie qui empêche tout contact avec le moyen de codage annulaire notamment durant l'opération de montage de l'assemblage à roulement instrumenté.

L'invention vise en outre un essieu instrumenté comportant une fusée d'essieu et un assemblage à roulement monté sur la fusée d'essieu.

Le procédé de montage d'un assemblage à roulement instrumenté tel que décrit précédemment sur le roulement et l'essieu d'un véhicule, consiste à
- monter un roulement sur la fusée de l'essieu ;
- monter une entretoise équipée sur sa surface extérieure d'un codeur annulaire magnétique et rotatif, sur ladite fusée;
- monter un déflecteur annulaire directement ou indirectement sur la bague extérieure du roulement ;
- positionner ledit capteur fixe vis-à-vis du déflecteur annulaire ;
- serrer axialement l'entretoise sur la bague intérieure du roulement ;
- visser le chapeau de fusée sur la fusée.

Les cinq dernières étapes peuvent le cas échéant être effectuées sur un roulement existant monté au préalable sur la fusée d'essieu.

### BREVE DESCRIPTION DES FIGURES

D'autres caractéristiques et avantages de l'invention ressortiront à la lecture de la description qui suit, en référence aux figures annexées, qui illustrent :
- la figure 1, déjà commentée, une coupe des éléments essentiels d'un roulement connu ;
- la figure 2A une coupe partielle et schématique d'un roulement instrumenté selon un premier mode de réalisation de l'invention ;
- la figure 2B, une vue en coupe d'une partie du roulement de la figure 2A ; et
- les figures 3 à 7, des coupes partielles schématiques d'autres modes de réalisation de l'invention.

Pour plus de clarté, les éléments identiques ou similaires sont repérés par des signes de référence identiques sur l'ensemble des figures.

### DESCRIPTION DETAILLEE D'UN MODE DE REALISATION

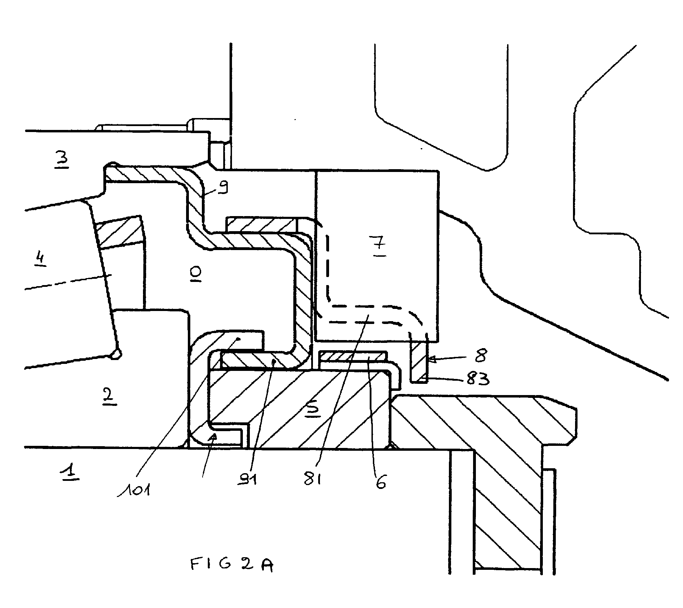

Une première façon de réaliser l'invention est illustrée sur la figure 2A où sont schématisés les principaux éléments constitutifs d'un assemblage à roulement instrumenté selon l'invention, monté sur la fusée 1 de l'essieu. Le roulement est constitué, de façon connue, d'au moins une bague intérieure 2 rotative solidaire de la fusée 1, d'une bague extérieure fixe 3, ces bagues définissant des chemins de roulement pour des corps roulants 4, ici des rouleaux coniques. Les bagues 2, 3 du roulement délimitent entre elles un volume intérieur 0 fermé axialement par un ou plusieurs déflecteurs annulaires.

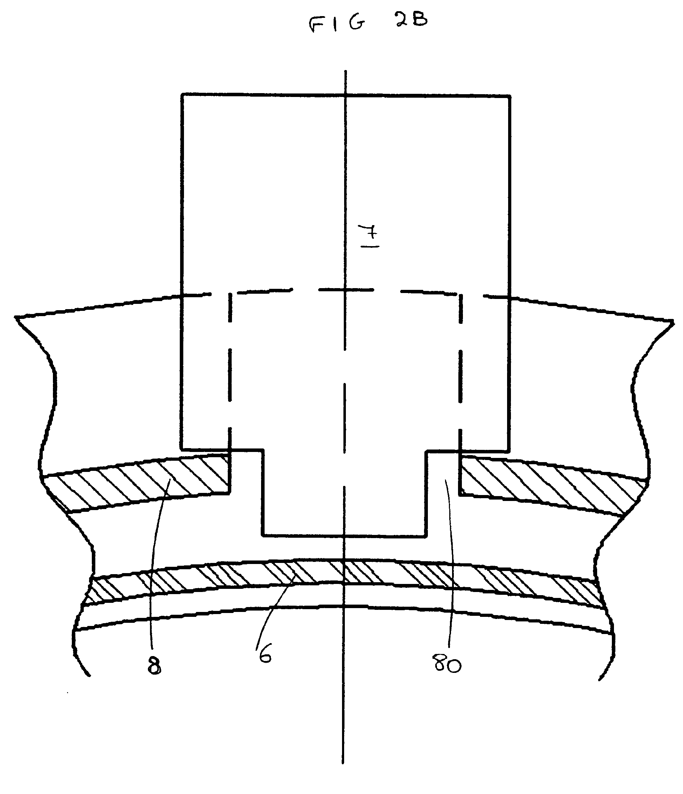

Selon le mode de réalisation des figures 2A et 2B, on prévoit un premier déflecteur fixe 9 emmanché intérieurement dans un chambrage de la bague fixe 3, et un second déflecteur 10 rotatif monté en appui axial contre la bague intérieure 2. Plus précisément le second déflecteur 10 est intercalé axialement entre la bague intérieure 2 du roulement et une entretoise rotative 5 sur laquelle est vissé le chapeau de la fusée 1. Il présente une concavité tournée vers l'entretoise 5. Le premier déflecteur (fixe) 9 présente un rebord intérieur 91 qui pénètre entre un rebord extérieur 101 du second déflecteur (rotatif) 10 et une partie de la surface extérieure de l'entretoise 5. Il y a ainsi un recouvrement axial partiel des rebords 91, 101 qui contribue à définir un labyrinthe d'étanchéité entre les déflecteurs respectivement fixe 9 et rotatif 10.

Un déflecteur annulaire 8 est est monté sur le premier déflecteur fixe 9, plus précisément sur un plan annulaire du premier déflecteur parallèle à l'axe de rotation de l'essieu (non représenté). Le déflecteur 8 présente un deuxième plan annulaire 81 selon l'axe de rotation de l'essieu, qui est placé en face et à proximité d'un moyen de codage annulaire 6. Il présente deux changements de section comme illustré sur la figure 2A.

Par ailleurs, et comme visible sur la figure 2B, le déflecteur 8 peut être réalisé en un matériau métallique ; il est alors pourvu d'au moins une ouverture 80 pour le passage de la tête d'un capteur 7

Le capteur fixe 7, connu en soi, permet par exemple de mesurer une vitesse (ou encore une température, ou des vibrations). Il est placé en vis-à-vis du moyen de codage annulaire 6; le capteur 7 est préférentiellement disposé de façon à empêcher tout contact avec le codeur annulaire 6 durant l'opération de montage et/ou de démontage du chapeau sur la fusée 1 de l'essieu.

Sans sortir du cadre de l'invention, le déflecteur 8 peut être constitué d'un matériau amagnétique, auquel cas aucune ouverture dans le déflecteur 8 n'est nécessaire.

En outre, le moyen de codage annulaire 6 peut être un anneau d'impulsion magnétique ( AIM) ou une roue phonique ( roue dentée ), lié en rotationà l'entretoise 5.

De façon avantageuse, l'extrémité axiale 83 du déflecteur 8 présente un diamètre intérieur qui est inférieur au diamètre extérieur du moyen de codage annulaire 6. On réalise ainsi une protection du codeur 6 vis-à-vis de toute forme de pollution extérieure au roulement et vis-à-vis des chocs mécaniques lors du montage ou du démontage.

Par ailleurs, un tel montage garantit une bonne précision sur le signal obtenu par le capteur, grâce aux dispositions respectives du capteur 7 et du codeur 6 d'une part, et au montage du codeur 6 sur l'entretoise 5 d'autre part. Le contrôle de la coaxialité entre le codeur 6 et la fusée 1 ne devient plus nécessaire.

Par ailleurs le codeur 6 peut être fourni indépendamment du capteur, ce qui représente un allègement des contraintes de montage d'un tel système.

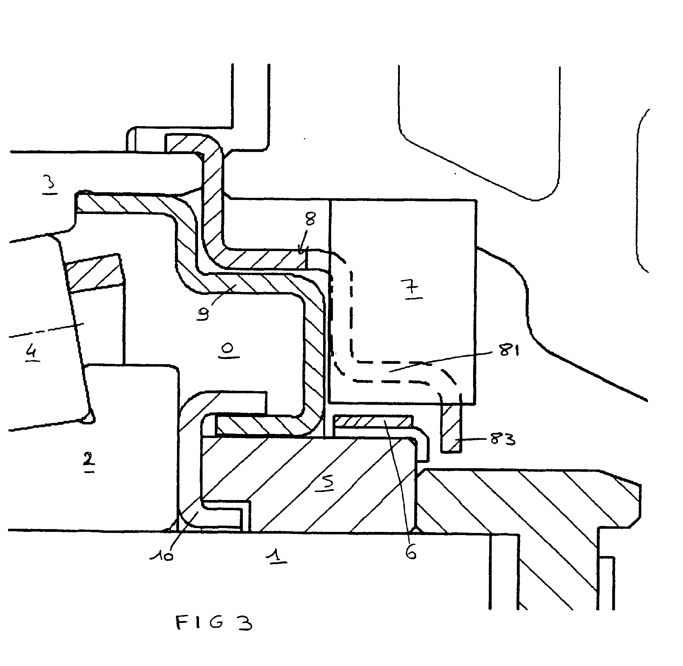

Le mode de réalisation selon la figure 3 diffère de celui qui vient d'être décrit en ce que le déflecteur 8 n'est pas lié par sa face la plus externe au premier déflecteur 9 mais il est solidarisé à la bague externe 3 du roulement, et axialement intercalé entre cette bague 3 et le carter de la boîte d'essieu. Ainsi, le déflecteur 8 présente trois changements de section (non référencés).

Ce mode de réalisation sera préférentiellement utilisé lorsque du fait de la configuration du premier déflecteur 9, il est difficile d'y monter le déflecteur 8.Ce concept est donc particulièrement intéressant lorsque le déflecteur 8 doit être monté sur un roulement standard non prévu initialement pour ce montage.

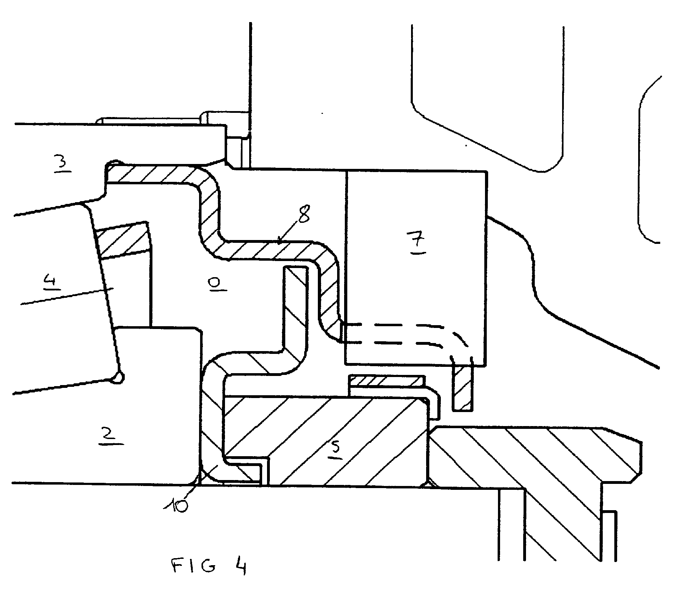

La figure 4 schématise un agencement dans lequel on ne prévoit pas de premier déflecteur 9. L'étanchéité est ici réalisée par la conjugaison des formes du second déflecteur 10 et du déflecteur 8 qui est emmanché intérieurement dans la bague fixe extérieure 3 du roulement. Le déflecteur 8 comprend ici trois changements de section. Ce mode de réalisation sera avantageusement choisi dans le cas d'une conception d'un roulement nouveau intégrant dès l'origine le déflecteur 8, et dans la perspective d'une minimisation du nombre de pièces, ce qui simplifie le montage.

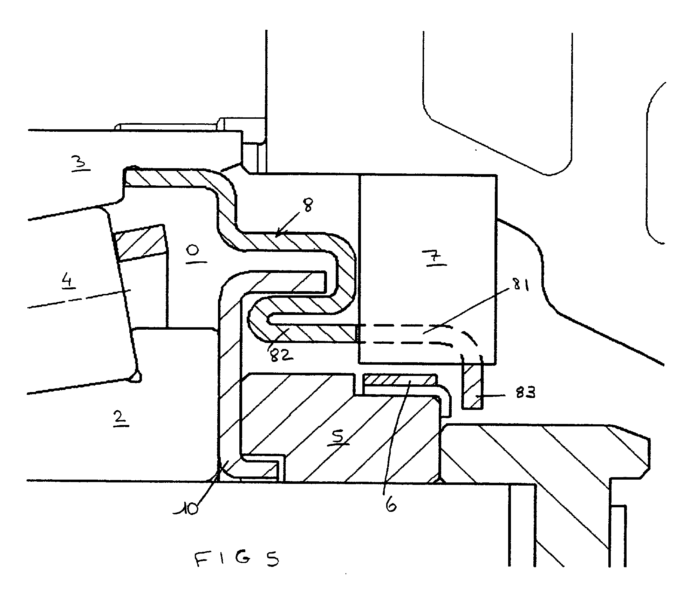

Selon la figure 5, il est prévu un second déflecteur fixe 10 de concavité orientée vers l'entretoise 5 et dont la « hauteur « mesurée radialement permet d'inclure l'entretoise 5 et une partie repliée 82 du déflecteur 8. La partie repliée 82 est disposée, radialement, entre l'entretoise 5 et la zone du second déflecteur 10 ayant le plus grand diamètre. Le déflecteur 8 fixe est ici emmanché intérieurement dans un chambrage de la bague extérieure 3 du roulement. Selon cette configuration, le déflecteur 8 comprend trois changements de section et une partie repliée 82, ce qui crée un labyrinthe d'étanchéité. Bien entendu et conformément à l'invention, le déflecteur 8 comprend une zone annulaire 81 disposée en vis-à-vis du codeur annulaire 6. Ce type de montage sera préférentiellement choisi lorsque l'on crée un nouveau roulement avec le soucis de minimiser le nombre de pièce et de renforcer l'étanchéité.

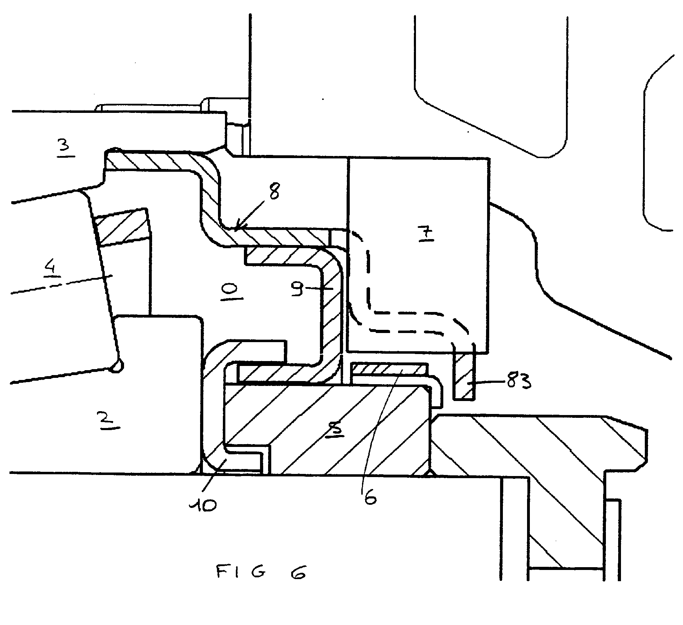

La figure 6 illustre un mode de réalisation comprenant le déflecteur annulaire 8 à trois changements de section, un premier déflecteur fixe 9 et un second déflecteur rotatif 10, qui présente une variante des moyens d'étanchéité. Ces éléments sont agencés de la façon suivante : Le déflecteur 8 est emmanché intérieurement dans un chambrage de la bague fixe 3 du roulement, il présente trois changements de section et un diamètre intérieur inférieur au diamètre extérieur du moyen de codage annulaire 6 ; le premier déflecteur 9 dont la concavité est tournée vers le volume intérieur 0 du roulement, est fixé par sa face la plus externe sur l'une des faces internes du déflecteur 8. Le second déflecteur 10 dont la concavité est tournée vers l'entretoise 5, est inversée vis à vis de celle du premier déflecteur 9. Les premier et second déflecteurs se chevauchent axialement respectivement par leurs zones annulaires inférieure et supérieure pour former la partie active du labyrinthe.

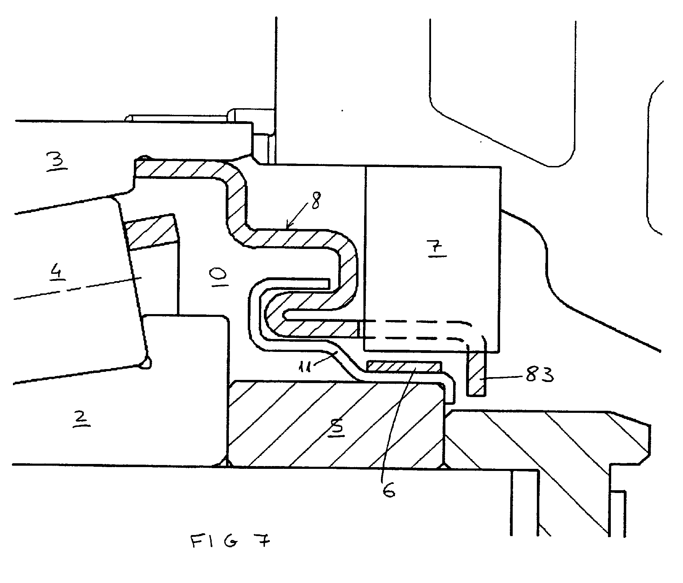

La figure 7 illustre un agencement comportant un seul déflecteur 8 emmanché intérieurement dans la bague extérieure fixe 3 du roulement. Le déflecteur 8 comporte trois changements de section et est replié près de sa partie intérieure pour former un labyrinthe avec un support annulaire rotatif 11 qui par ailleurs sert de support au codeur annulaire 6. Plus précisément la base du support annulaire 11 est fixée et intercalée entre l'entretoise 5 et le codeur annulaire 6 ; l'autre extrémité du support 11 est pliée autour de la partie pliée du déflecteur 8.

Dans l'ensemble des modes de réalisation illustrés sur les figures, le capteur 7 est situé à l'extérieur du volume intérieur 0 du roulement ou se trouve un lubrifiant, ce volume intérieur étant selon les cas délimités par les déflecteurs fixe 9 et rotatif 10 (figures 2 et 3), par les déflecteurs 8 et 10 (figure 4 et 5), par les déflecteurs 8, 9 et 10 (figure 6) ou enfin par le déflecteur 8 et le support 11 (figure 7).

Ce mode de réalisation ne nécessitant qu'un seul déflecteur, il sera choisi de préférence dans un cas de création d'un nouveau roulement, avec pour objectif la limitation du nombre de pièces et le renforcement de l'étanchéité.

## Revendications

1. Assemblage à roulement instrumenté pour une fusée d'essieu (1), comportant :
- un roulement comprenant au moins une bague intérieure rotative (2) destiné à être fixée sur la fusée (1) d'essieu, et une bague extérieure fixe (3) entre lesquelles sont disposés des corps roulants (4) assurant une liaison rotative entre lesdites bagues (2, 4),
- un moyen délimitant un volume intérieur (0) du roulement, pourvu d'un lubrifiant
- une entretoise rotative (5) destinée à être solidarisée à la fusée (1) de l'essieu en appui axial direct ou indirect sur la bague intérieure (2) du roulement,
- un moyen de codage annulaire magnétique (6)
- un capteur magnétique fixe (7) disposé à une distance d'entrefer radial du moyen de codage annulaire pour détecter les déplacements dudit moyen de codage annulaire (6)
- au moins un déflecteur annulaire (8) lié directement ou indirectement à la bague extérieure (3) du roulement et présentant
- une partie cylindrique (81) disposée radialement à l'extérieur en face et à distance du moyen de codage annulaire (6),
- une fenêtre ou une paroi amagnétique disposée entre le capteur fixe et le moyen de codage annulaire,
- une partie d'extrémité (83) de diamètre intérieur inférieur au diamètre extérieur du moyen de codage annulaire (6).
**caractérisé en ce que**
le moyen de codage annulaire magnétique (6) est lié en rotation et fixé à l'entretoise (5) à l'extérieur du volume intérieur du roulement,
et **en ce que** le capteur fixe (7) est situé à l'extérieur du volume intérieur du roulement, séparé du volume intérieur du roulement par un labyrinthe d'étanchéité.

2. Assemblage à roulement instrumenté selon la revendication 1 **caractérisé en ce que** le déflecteur annulaire (8) est métallique et présente au moins une ouverture constituant ladite fenêtre pour le passage d'au moins une partie du capteur.

3. Assemblage à roulement instrumenté selon la revendication 1 **caractérisé en ce que** le déflecteur (8) est amagnétique.

4. Assemblage à roulement instrumenté selon l'une des revendications précédentes **caractérisé en ce que** la partie cylindrique du déflecteur est située à une distance du moyen de codage annulaire (6) inférieure ou égale à la distance d'entrefer.

5. Assemblage à roulement instrumenté selon la revendication 4, **caractérisé en ce que** le capteur fixe est disposé radialement à l'extérieur de la partie cylindrique du déflecteur.

6. Assemblage à roulement instrumenté selon l'une des revendications précédentes **caractérisé en ce que** le moyen de codage (6) est un codeur multipolaire constitué d'un anneau d'impulsion magnétique, ou une roue phonique.

7. Assemblage à roulement instrumenté selon l'une des revendications précédentes **caractérisé en ce que** le déflecteur (8) est lié directement à la bague extérieure (3) du roulement.

8. Assemblage à roulement instrumenté selon l'une quelconque des revendications 1 à 6 **caractérisé en ce que** le déflecteur (8) est lié à un déflecteur complémentaire fixe (9) qui est lié directement à la bague extérieure (3) du roulement.

9. Assemblage à roulement instrumenté selon l'une quelconque des revendications 1 à 8, **caractérisé en ce qu'**il comprend en outre un support annulaire (11) radialement intercalé entre l'entretoise rotative (5) et le moyen de codage annulaire (6), formant le labyrinthe d'étanchéité avec ledit déflecteur annulaire (8).

10. Assemblage à roulement instrumenté selon l'une quelconque des revendications 1 à 8, **caractérisé en ce qu'**il comprend en outre un déflecteur mobile (10) présentant une concavité dirigée vers l'entretoise (5), disposé axialement entre l'entretoise (5) et la bague intérieure (2) du roulement, destiné à former le labyrinthe d'étanchéité avec le déflecteur annulaire (8) ou le déflecteur complémentaire (9).

11. Essieu instrumenté comportant une fusée d'essieu et un assemblage à roulement instrumenté selon l'une quelconque des revendications précédentes,monté sur la fusée (1) d'essieu.

## Claims

1. Instrumented bearing assembly for an axle journal (1) comprising:
- a bearing comprising at least one rotary inner ring (2) intended to be fixed to the axle journal (1) and a fixed outer ring (3) between which rolling bodies (4) are placed, providing a rotary connection between said rings (2, 4),
- a means delimiting an internal space (0) of the bearing, provided with a lubricant,
- a rotary spacer (5) intended to be secured to the axle journal (1) in direct or indirect axial abutment on the inner raceway (2) of the bearing,
- a magnetic annular coding means (6),
- a fixed magnetic sensor (7) placed at a radial air-gap distance from the annular coding means for detecting the movement of said annular coding means (6),
- at least one annular deflector (8) connected directly or indirectly to the inner spacer (3) of the bearing and having
-- a cylindrical part (81) placed radially outside facing and at a distance from the annular coding means (6),
-- a non-magnetic wall or window placed between the fixed sensor and the annular coding means,
-- an end part (83) with an inside diameter less than the outside diameter of the annular coding means (6),
**characterised in that**
the magnetic annular coding means (6) is connected rotationally and fixed to the spacer (5) outside the internal space of the bearing,
and **in that** the fixed sensor (7) is situated outside the internal space of the bearing, separated from the internal space of the bearing by a sealing labyrinth.

2. Instrumented bearing assembly according to claim 1, **characterised in that** the annular deflector (8) is metallic and has at least one opening constituting said window for the passage of at least one part of the sensor.

3. Instrumented bearing assembly according to claim 1, **characterised in that** the deflector (8) is non-magnetic.

4. Instrumented bearing assembly according to any one of the preceding claims, **characterised in that** the cylindrical part of the deflector is situated at a distance from the annular coding means (6) less than or equal to the air-gap distance.

5. Instrumented bearing assembly according to claim 4, **characterised in that** the fixed sensor is placed radially outside the cylindrical part of the deflector.

6. Instrumented bearing assembly according to any one of the preceding claims, **characterised in that** the coding means (6) is a multipolar coder comprising a magnetic pulse ring, or a phonic wheel.

7. Instrumented bearing assembly according to one of the preceding claims, **characterised in that** the deflector (8) is connected directly to the outer ring (3) of the bearing.

8. Instrumented bearing assembly according to any one of claims 1 to 6, **characterised in that** the deflector (8) is connected to a fixed complementary deflector (9) that is directly connected to the outer ring (3) of the bearing.

9. Instrumented bearing assembly according to any one of claims 1 to 8, **characterised in that** it also comprises an annular support (11) radially interposed between the rotary spacer (5) and the annular coding means (6), forming the sealing labyrinth with said annular deflector (8),

10. Instrumented bearing assembly according to any one of claims 1 to 8, **characterised in that** it also comprises a movable deflector (10) having a concavity directed towards the spacer (5), placed axially between the spacer (5) and the inner ring (2) of the bearing, intended to form the sealing labyrinth with the annular deflector (8) or the complementary deflector (9).

11. Instrumented axle comprising an axle journal and an instrumented bearing assembly according to any one of the preceding claims, mounted on the axle journal (1).

## Patentansprüche

1. Instrumentierter Lagerverbund für einen Achsschenkel (1), umfassend:
- ein Lager mit zumindest einen inneren Drehring (2), der dazu bestimmt ist, auf dem Achsschenkel (1) befestigt zu werden, und einen feststehenden außenring (3) zwischen denen Rollkörper (4) angeordnet sind, die für eine drehende Verbindung zwischen den besagten Ringen (2, 4) sorgen,
- eine Vorrichtung zum Eingrenzen eines Innenvolumens (0) des Lagers, die mit einem Schmiermittel versehen ist,
- ein drehendes Zwischenstück (5), das dazu bestimmt ist, direkt oder indirekt axial auf dem Innenring (2) des Lagers anliegend kraftschlüssig mit dem Achsschenkel (1) verbunden zu werden,
- eine ringförmige magnetische Codiervorrichtung (6),
- einen festen Magnetsensor (7), der in einem radialen Luftspaltabstand zur ringförmigen magnetischen Codiervorrichtung angeordnet ist, um die Bewegungen der besagten ringförmigen magnetischen Codiervorrichtung (6) zu erfassen,
- zumindest einen ringförmigen Abweiser (8), der direkt oder indirekt mit dem außenring (3) des Lagers verbunden ist, und folgendes aufweist:
- einen zylindrischen Abschnitt (81), der außen radial gegenüber und auf Abstand zur ringförmigen Codiervorrichtung (6) angeordnet ist,
- ein unmagnetisches Fenster oder eine unmagnetische Wand, die zwischen dem festen Schalter und der ringförmigen Codiervorrichtung angeordnet ist,
- einen Endabschnitt (83) mit einem Innendurchmesser kleiner als der Außendurchmesser der ringförmigen Codiervorrichtung (6),
**dadurch gekennzeichnet, dass**
die ringförmige magnetische Codiervorrichtung (6) an der Außenseite des Innenvolumens des Lagers mit dem Zwischenstück drehend verbunden, und befestigt ist, und dadurch, dass sich der feste Sensor (7) an der Außenseite des Innenvolumens des Lagers befindet, und durch eine Labyrinthdichtung vom Innenvolumen des Lagers getrennt ist.

2. Instrumentierter Lagerverbund nach Anspruch 1, **dadurch gekennzeichnet, dass** der ringförmige Abweiser (8) aus Metall ist, und zumindest eine Öffnung aufweist, die das besagte Fenster für den Durchgang zumindest eines Teils des Schalters darstellt.

3. Instrumentierter Lagerverbund nach Anspruch 1, **dadurch gekennzeichnet, dass** der Abweiser (8) unmagnetisch ist.

4. Instrumentierter Lagerverbund nach einem der vorherigen Ansprüche, **dadurch gekennzeichnet, dass** sich der zylindrische Abschnitt des Abweisers in einem Abstand zur ringförmigen Codiervorrichtung (6) befindet, der kleiner oder gleich dem Abstand des Luftspalts ist.

5. Instrumentierter Lagerverbund nach Anspruch 4, **dadurch gekennzeichnet, dass** der feste Sensor radial außen am zylindrischen Abschnitt des Abweisers angeordnet ist.

6. Instrumentierter Lagerverbund nach einem der vorherigen Ansprüche, **dadurch gekennzeichnet, dass** die Codiervorrichtung (6) ein mehrpoliger Geber ist, der aus einem magnetischen Impulsring oder einem Tonfrequenz-Motor besteht.

7. Instrumentierter Lagerverbund nach einem der vorherigen Ansprüche, **dadurch gekennzeichnet, dass** der Abweiser (8) direkt mit dem außenring (3) des Lagers verbunden ist.

8. Instrumentierter Lagerverbund nach irgendeinem der Ansprüche 1 bis 6, **dadurch gekennzeichnet, dass** der Abweiser (8) mit einem ergänzenden festen Abweiser (9) verbunden ist, der direkt mit dem außenring (3) des Lagers verbunden ist.

9. Instrumentierter Lagerverbund nach irgendeinem der Ansprüche 1 bis 8, **dadurch gekennzeichnet, dass** er darüber hinaus eine ringförmige Halterung (11) umfasst, die radial zwischen dem drehenden Zwischenstück (5) und der ringförmigen Codiervorrichtung (6) eingelagert ist, und mit dem besagten ringförmigen Abweiser (8) die Labyrinthdichtung bildet.

10. Instrumentierter Lagerverbund nach irgendeinem der Ansprüche 1 bis 8, **dadurch gekennzeichnet, dass** er darüber hinaus einen beweglichen Abweiser (10) umfasst, der eine Konkavität in Richtung des Zwischenstücks (5) aufweist, und der axial zwischen dem Zwischenstück (5) und dem inneren Ring (2) des Lagers angeordnet ist, und dazu bestimmt ist, mit dem ringförmigen Abweiser (8) oder dem ergänzenden Abweiser (9) die Labyrinthdichtung zu bilden.

11. Instrumentierte Achse umfassend einen Achsschenkel und einen instrumentierten Lagerverbund nach irgendeinem der vorherigen Ansprüche, der auf dem Achsschenkel (1) montiert ist.
